Europäisches Patentamt

(19) European Patent Office

Office européen des brevets

(11) Publication number : **0 209 245 B1**

(12) **EUROPEAN PATENT SPECIFICATION**

(45) Date of publication of patent specification :
05.06.91 Bulletin 91/23

(51) Int. Cl.⁵ : **H02G 15/013, H02G 15/18**

(21) Application number : 86304520.9

(22) Date of filing : 12.06.86

(54) Heat insulating device.

(30) Priority : 14.06.85 DE 3521369

(43) Date of publication of application :
21.01.87 Bulletin 87/04

(45) Publication of the grant of the patent :
05.06.91 Bulletin 91/23

(84) Designated Contracting States :
AT BE CH FR GB IT LI NL SE

(56) References cited :
EP-A- 0 040 101
DE-U- 8 125 727
PATENT ABSTRACTS OF JAPAN, vol. 2, no. 13
(E-77), 28th January 1978; & JP-A-52 129 993
(SUMITOMO DENKI KOGYO K.K.) 31-10-1977

(73) Proprietor : Walter Rose GmbH & Co. KG
Lütkenheider Strasse 2
W-5800 Hagen 1 (DE)

(72) Inventor : Kastrop, Dieter
Ringstrasse 48
W-5804 Herdecke (DE)
Inventor : Papenheim, Friedbert
Ernststrasse 7
W-5860 Iserlohn 7 (DE)

(74) Representative : Auckland, Jacqueline et al
Raychem Limited Intellectual Property Law
Department Faraday Road Dorcan
Swindon, Wiltshire SN3 5HH (GB)

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a heat insulating, sheet device comprising at least one heat resistant carrier sheet which is coated with hot-melt adhesive on both sides thereof. The device is especially suitable for use around cables at cable entries into cable couplers, particularly those couplers that are installed by heating, for example those consisting of polymeric material that is heat-shrinkable at least in areas.

German Gebrauchmuster 81 25 727 discloses an adhesive coated heat-insulating sheet material. It has now been demonstrated that when heat is applied because of the structure of the sheet material it can not be guaranteed that the coating of hot-melt adhesive facing towards the cable, in the assembled position, will always be activated, since it is covered by the heat-insulating material.

In order to achieve an improved conduction of heat, European Patent A1 0 40 101 provides as the carrier layer a metal foil, which enhances heat conduction to the coating of hot-melt adhesive. The metal foil is heat conducting, not heat insulating.

It is an aim of the invention to provide a solution with which, using a heat-insulating sheet of the kind mentioned in the above Gebrauchmuster, the activation of the adhesive layer facing the cable is enhanced, and preferably guaranteed. The assembly is simple, and subsequent ingress of moisture in an axial direction between the cable sheathings to be sheathed and the heat-insulating sheet is prevented. Also relative movement between the heat insulating sheet and the cable sheath is substantially prevented.

This problem is solved in the present invention using a heat insulating device, wherein at least in the region of a heat resistant carrier sheet, the device is provided with openings arranged in the manner of a lattice.

This configuration means that the coating of hot-melt adhesive that faces the cable sheathing (that is on the inside of the heat insulating sheeting) is reliably melted when heat is applied, without the effect of the heat-insulating sheeting being reduced thereby.

In one embodiment of the invention, the device comprises, on one side, a sheet-like edge region formed exclusively of adhesive.

This embodiment is advantageous for some applications, when, for example, a generally rigid, protective insert is used inside a heat-shrinkable sleeving of a cable splice, it is preferred that the heat insulating sheeting around the cables should be applied directly ajoining the cut-back cable sheathing, that is to say, it should butt against this protective insert or the outer, typically conically ending edge regions thereof. With the known solution, once heat has been applied the transition of this truncated conical region to the heat insulating sheeting may generate a seam or depression. With the preferred embodiment of the invention the seam or depression is avoided by the edge region of hot melt adhesive which can be positioned at that region.

Preferably the layer of adhesive facing the cable is provided, at least in areas, with adhesive areas exhibiting an adhesive action at room temperature. With this embodiment, assembly is considerably simplified, since these adhesive areas provide the fitter with an opportunity of fastening the heat insulating sheeting easily to the desired place on the cable sheathing of the cable to be enclosed.

The invention additionally provides that the openings in the carrier sheet are arranged in rows, and adjacent rows are staggered with respect to one another, wherein provision may be made particularly for the linear extent of an opening to be greater than the distance between adjacent openings.

Of course, the invention is not restricted to these configurations of the openings and the arrangement in columns and rows that are staggered with respect to one another ; alternative configurations can also be provided here.

The invention is explained in more detail below by way of example with reference to the drawing, in which :

Figure 1 shows the perspective view of a cable coupler with the device according to the invention, partially in section,

Figure 2 shows an opened out version of the device in plan view, and

Figure 3 shows a section along the line III/III in Figure 2.

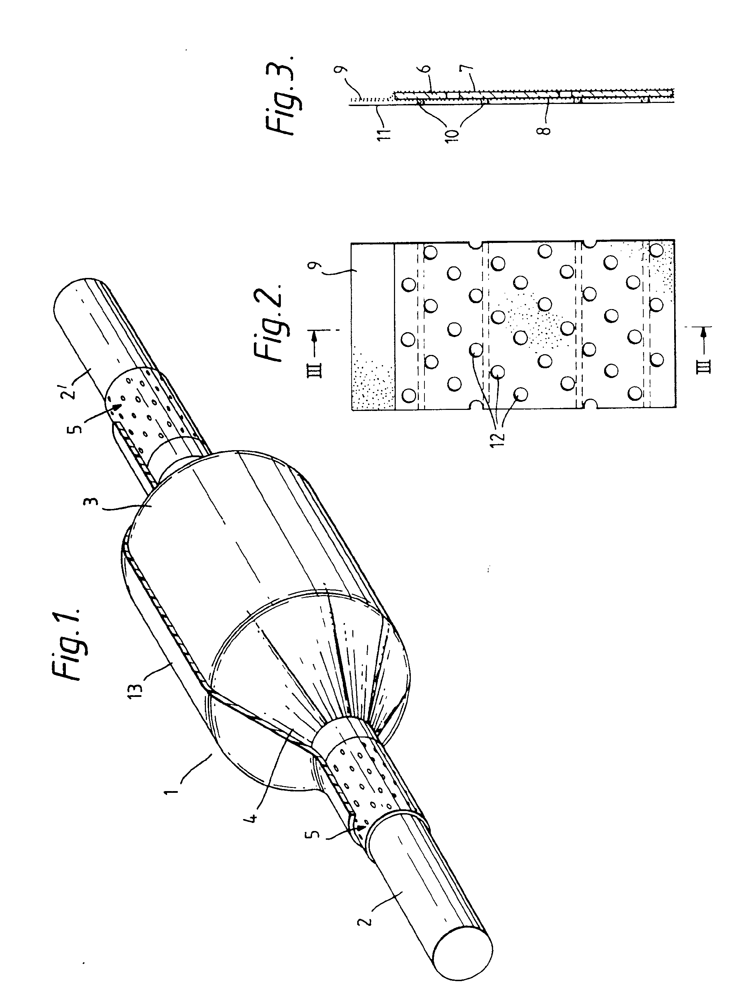

The ends of two cables 2 and 2' enter a cable coupler denoted generally by the reference 1. The cable splice is not shown in detail. Several measures are taken in order to protect the cable splice against moisture and other adverse effects of the surroundings. Firstly, it is enclosed by a protective insert 3 which has ends 4 in the shape of a truncated cone which terminate at the surface of the cable 2. Adjoining this area are the devices according to the invention, denoted generally by the reference 5, which are initially adhered to the surface of the cable 2 or 2'. Both the protective insert 3 and the devices 5 are enclosed by a plastics sheathing 13 which is heat-shrinkable at least in areas, illustrated partially cut away in Figure 1.

The device 5 is of multi-layer construction and is designed as a heat insulating sheet. Thus, this heat insulating sheet 5 has an inner carrier or protective sheet 6 which is provided outside and inside with coating 7 and 8 respectively of adhesive comprising hot melt adhesive.

At the edge region 9 facing towards the supporting insert 3 the hot melt adhesive coatings 7 and 8 converge with no heat resistant carrier sheet 6 between them. This is shown especially clearly in Figure 3. Thus edge region 9 comprises adhesive only.

On the side facing towards the cable sheathing in the position of use, in addition to the hot melt adhesive coating 8, there are provided areas of adhesive 10, in the form of strips in the example illustrated. Adhesive 10 exhibits an adhesive action at room temperature and serves as an aid to assembly. In their transport state, these areas of adhesive 10 are covered with a protective paper 11, for example silicone-treated paper.

In order to ensure that heat penetrates through the carrier sheet 6 when heat is applied externally, this carrier sheet 6 has a plurality of openings 12 distributed in a grid-fashion, arranged in separate columns and rows.

The arrangement may be such that, as illustrated, three rows of openings permit a direct introduction of heat in the column direction, that is to say, two adjacent rows each have the openings arranged in such a manner that the sum of the two linear extents of these openings is greater than the spacing of the openings in the previous line. Of course, this arrangement need not, as illustrated, always be with three rows, but also with two rows, for examples when the openings are oval, without the invention being restricted hereto.

As already mentioned, the invention is not restricted to the type, arrangement and shaping of the adhesive areas 10 for fixing the device 5 to the outer sheathings of the cables 2 and 2'. The sheet like region 9 made exclusively of hot melt adhesive may also be arranged, in use, on the other side of the device 5, should this be desirable, and so on.

## Claims

1. A device (5) suitable for use around cables (2) at cable entries into cable couplers (1), the device being heat insulating and in the form of a sheet which comprises at least one heat resistant carrier sheet (6) coated with hot melt adhesive (7, 8) on both sides thereof, the device (5) containing apertures (12), at least in the region of the heat resistant carrier sheet (6), the apertures (12) being distributed in the manner of a lattice.

2. A device according to claim 1, comprising on one side, a sheet like edge region (9) formed exclusively of adhesive.

3. A device according to claims 1 or 2, wherein the layer of adhesive (8) which, in use, faces the cable (2) is provided, at least in areas, with adhesive areas (10) exhibiting an adhesive action at room temperature.

4. A device according to any one of the preceding claims, wherein the openings (12) are arranged in rows, and adjacent rows are staggered with respect to one another.

5. A device according to claim 4, wherein that the linear extent of an opening (12) is greater than the distance between adjacent openings.

## Ansprüche

1. Vorrichtung (5), die zum Gebrauch um Kabel (2) an Kabeleinführungen in Kabelmuffen (1) geeignet ist, wobei die Vorrichtung wärmeisolierend und als Flächenkörper ausgebildet ist, der wenigstens einen auf beiden Seiten mit Schmelzkleber (7, 8) beschichteten wärmebeständigen Träger-Flächenkörper (6) umfaßt, wobei die Vorrichtung (5) wenigstens im Bereich des wärmebeständigen Träger-Flächenkörpers (6) Öffnungen (12) aufweist, die in Form eines Gitters verteilt sind.

2. Vorrichtung nach Anspruch 1, die auf einer Seite einen flächenkörperartigen Randbereich (9) umfaßt, der ausschließlich aus Kleber gebildet ist.

3. Vorrichtung nach Anspruch 1 oder 2, wobei die Kleberschicht (8), die im Gebrauch dem Kabel (2) zugewandt ist, wenigstens bereichsweise Kleberzonen (10) aufweist, die bei Raumtemperatur Klebwirkung haben.

4. Vorrichtung nach einem der vorhergehenden Ansprüche, wobei die Öffnungen (12) in Reihen angeordnet sind und benachbarte Reihen gegeneinander versetzt sind.

5. Vorrichtung nach Anspruch 4, wobei die lineare Erstreckung einer Öffnung (12) größer als der Abstand zwischen benachbarten Öffnungen ist.

## Revendications

1. Dispositif (5) convenant pour l'utilisation autour de câbles (2) à des entrées de câbles dans des coupleurs de câbles (1), le dispositif étant doué d'isolation thermique et sous forme d'une feuille qui comprend au moins une feuille de support (6) résistant à la chaleur revêtue d'un adhésif thermofusible (7, 8) sur ses deux faces, le dispositif (5) contenant des orifices (12), au moins dans la zone de la feuille de support (6) résistant à la chaleur, les orifices (12) étant distribués à la manière d'un réseau.

2. Dispositif suivant la revendication 1, comprenant d'un côté une zone marginale (9) analogue à une feuille, formée exclusivement d'adhésif.

3. Dispositif suivant la revendication 1 ou 2, dans lequel la couche d'adhésif (8) qui, lors de l'utilisation, est tournée vers le câble (2), est munie au moins dans certaines parties, de zones adhésives (10) présentant une action adhésive à température ambiante.

4. Dispositif suivant l'une quelconque des revendications précédentes, dans lequel les orifices (12) sont disposés en rangées, et les rangées adjacentes sont décalées les unes par rapport aux autres.

5. Dispositif suivant la revendication 4, dans lequel l'étendue linéaire d'un orifice (12) est supérieure à la distance entre des orifices adjacents.

Fig.1.

Fig.2.

Fig.3.

EP 0 209 245 B1